# EUROPÄISCHE PATENTSCHRIFT

(11) **EP 3 607 816 B1**
(45) Veröffentlichungstag und Bekanntmachung des Hinweises auf die Patenterteilung: **07.06.2023**
(21) Anmeldenummer: 19184169.1
(22) Anmeldetag: 03.07.2019
(51) Int. Cl.: A01G 9/033, E04D 11/00

(54) **ANORDNUNG FÜR EINE DACHBEGRÜNUNG**
ASSEMBLY FOR ROOF GREENING
DISPOSITIF POUR UNE TOITURE VÉGÉTALE

(30) Priorität: 07.08.2018 DE 102018119175
(43) Veröffentlichungstag der Anmeldung: 12.02.2020
(73) Patentinhaber: Paul Bauder GmbH & Co. KG, 70499 Stuttgart (DE)
(72) Erfinder: Bauder, Tim, 70499 Stuttgart (DE); Ruttensperger, Stefan, 71296 Heimsheim (DE)
(74) Vertreter: Hoeger, Stellrecht & Partner Patentanwälte mbB

(56) Entgegenhaltungen:
- EP-A1- 2 681 989
- WO-A1-2017/003373
- DE-A1- 3 712 867
- DE-A1- 10 111 413
- DE-A1- 19 750 277
- FR-A1- 2 703 213
- GB-A- 2 484 739
- JP-A- H1 175 568
- US-A- 5 383 314
- Bauder: "Gründach-Systeme Produktübersicht", , 1 August 2013 (2013-08-01), pages 1-20, XP055777684, Retrieved from the Internet: URL:http://www.digdach.at/assets/downloads /Bauder-Gründach_Produktübersicht_0813_DE. pdf [retrieved on 2021-02-18]
- ZinCo: "Floradrain FD40", ZinCo GmbH - Produktdatenblatt, 1 April 2017 (2017-04-01), XP055725303, Retrieved from the Internet: URL:https://www.zinco.de/sites/default/fil es/products/data_sheets/2017-04/ZinCo_PDB_ Floradrain_FD40.pdf [retrieved on 2020-08-26]

## Beschreibung

Die Erfindung betrifft eine Anordnung für eine Dachbegrünung auf einem Gebäudedach, die ein derartiges Wasserretentionselement umfasst.

Dachbegrünungen, die insbesondere bei Flachdächern mit einer Neigung von bis zu 5° eingesetzt werden, haben verschiedene Vorteile. Neben ökologischen Aspekten ist hier insbesondere die hohe thermische Isolationswirkung einer Dachbegrünung zu nennen. Im Sommer ergibt sich sogar ein Kühlungseffekt durch die Verdunstung von Wasser über die Pflanzen.

Auch für die Siedlungswasserwirtschaft sind Dachbegrünungen sehr vorteilhaft, weil ein Teil des Niederschlagswassers von den Pflanzen verbraucht bzw. verdunstet wird und somit die öffentliche Kanalisation entlastet werden kann. Ein weiterer Teil des Niederschlagswassers wird verzögert in die Kanalisation eingeleitet aufgrund des Speichereffektes der Substratschicht. Da diese Speicherkapazität aber naturgemäß begrenzt ist, kommt es bei großen Niederschlagsmengen, insbesondere wenn diese innerhalb kurzer Zeit anfallen, letztlich doch zu einem starken Zufluss in die Kanalisation von ablaufendem Niederschlagswasser.

Es ist daher generell wünschenswert, das Wasserretentionsvermögen von Flachdachbegrünungen zu erhöhen. Dieses kann quantifiziert werden durch die sogenannte Abflusskennzahl, die definiert ist als das Verhältnis der abfließenden Wassermenge zur Niederschlagsmenge innerhalb eines vorgegebenen Zeitraums.

Um dieses Ziel zu erreichen, wurden im Stand der Technik bereits verschiedene Lösungen vorgeschlagen, bei denen eine Speicherung von Niederschlagswasser in Hohlräumen unterhalb der Substratschicht vorgesehen ist. Die erforderlichen Maßnahmen, um dieses Wasser wieder abfließen zu lassen, sind jedoch in der Regel sehr aufwendig und teuer in der Umsetzung. Zudem sind diese Lösungen meistens nur bei Flachdächern ohne Neigung optimal zu verwirklichen, wohingegen in der Praxis Flachdächer mit einer Neigung im Bereich von 1° bis 5° bevorzugt sind.

Die DE 198 52 561 C1 offenbart ein Wasserabflusssystem für Dachflächen, insbesondere für begrünte Dachflächen, bei dem der Ablauf von Wasser über ein zentrales Drosselventil vorgesehen ist.

Die DE 103 30 318 A1 offenbart eine Wasserspeicher- und Drainagevorrichtung für Dachbegrünungen, die in Form einer Mäanderplatte ausgebildet ist. Die DE 198 52 561 A1 offenbart eine Entwässerungseinrichtung für Dachbegrünungen, bei der mehrere Speicherkammern über Strömungsbrücken mit einem Kapillareffekt miteinander verbunden sind.

Die GB 2484739 A offenbart eine Anordnung nach dem Oberbegriff des Anspruchs 1.

Der vorliegenden Erfindung liegt die Aufgabe zugrunde, eine Anordnung zur Verringerung der Abflusskennzahl bei einer Dachbegrünung vorzuschlagen, welche einen einfachen Aufbau aufweist und vielseitig einsetzbar ist, insbesondere bei Flachdächern mit einer Neigung im Bereich von 0 bis 5°.

Diese Aufgabe wird durch eine Anordnung nach Anspruch 1 gelöst. Diese Anordnung für eine Dachbegrünung auf einem Gebäudedach umfasst in der angegebenen Reihenfolge: eine wasserundurchlässige Abdichtung des Gebäudedaches, eine Drainageschicht, ein Wasserretentionselement und eine Substratschicht zur Aufnahme von Pflanzen, wobei das Retentionselement als Flächenelement ausgebildet ist mit einer Mehrzahl von nebeneinander angeordneten, nach oben offenen Vertiefungen, wobei die Vertiefungen Bodenflächen aufweisen, die gemeinsam eine Unterseite des Retentionselements definieren, und Seitenflächen, an deren oberen Enden die Vertiefungen über Stege miteinander verbunden sind, und wobei zumindest ein Teil der Vertiefungen in den Bodenflächen und/oder in einem unteren Bereich der Seitenflächen einen oder mehrere Durchbrüche aufweist, und wobei die Gesamtfläche der Durchbrüche im Verhältnis zur Gesamtfläche der Bodenflächen einen Anteil von 0,02% bis 0,5% einnimmt.

Die konkrete Geometrie der Vertiefungen kann im Rahmen der Erfindung weitgehend frei gewählt werden. Insbesondere können die Bodenflächen der Vertiefungen z.B. rund oder vieleckig ausgebildet sein.

Das Retentionselement entspricht in seinem grundsätzlichen Aufbau einer Art Noppenfolie, die als solche bereits als Drainageelement unterhalb der Substratschicht von Dachbegrünungen eingesetzt wird. In den Vertiefungen des Retentionselements kann Wasser gespeichert werden, so dass zunächst die Speicherkapazität des gesamten Aufbaus der Dachbegrünung erhöht wird. Der wesentliche Unterschied zum Stand der Technik sind jedoch die in den Bodenflächen und/oder Seitenflächen der Vertiefungen vorgesehenen Durchbrüche, durch die zumindest ein Teil des gespeicherten Wassers verzögert nach unten entweichen kann. Dadurch wird ein Zustand vermieden oder zumindest verzögert, bei dem aufgrund einer vollständigen Sättigung des Substrats und des Retentionselements das zusätzliche Niederschlagswasser abfließt.

Das über die Durchbrüche aus dem Retentionselement abfließende Wasser wird von einer weiteren Schicht, die (auch) als Drainageschicht wirkt, aufgenommen. Dies wird unten im Zusammenhang mit der erfindungsgemäßen Anordnung für eine Dachbegrünung näher beschrieben.

Die Anzahl und Anordnung der Durchbrüche in den Bodenflächen und/oder Seitenflächen der Vertiefungen wird so gewählt, dass sich für eine gegebene Dachbegrünung, insbesondere unter Berücksichtigung der Dicke der Substratschicht und der Dachneigung, eine möglichst niedrige Abflusskennzahl ergibt. Dies kann durch einfache Versuche ermittelt werden.

Bei einer bevorzugten Ausführungsform der Erfindung, mit der in der Regel gute Ergebnisse erzielt werden können, weist jede Vertiefung in der Bodenfläche mindestens einen Durchbruch auf, insbesondere genau einen Durchbruch. In diesem Fall kann das gesamte in dem Retentionselement gespeicherte Wasser gleichmäßig nach unten ablaufen.

Bei einer alternativen Ausführungsform weisen nicht alle Vertiefungen Durchbrüche auf. So kann im Rahmen der Erfindung jede zweite Vertiefung in der Bodenfläche mindestens einen Durchbruch aufweisen, insbesondere genau einen Durchbruch. In den Vertiefungen ohne Durchbrüche kann in diesem Fall dauerhaft Wasser gespeichert werden, während insgesamt dennoch eine Entwässerung der Substratschicht nach unten möglich ist.

Um einen solchen dauerhaften Speichereffekt zu realisieren, ist gemäß einer weiteren Ausführungsform der Erfindung vorgesehen, dass zumindest ein Teil der Vertiefungen, bevorzugt jede Vertiefung, in einem unteren Bereich der Seitenfläche mindestens einen Durchbruch aufweist. Hierbei wird das unterhalb der Durchbrüche befindliche Wasser dauerhaft gespeichert, wobei dieses Speichervolumen über die Wahl des Abstandes zwischen den Durchbrüchen und der Bodenfläche der Vertiefungen eingestellt werden kann.

Das dauerhaft gespeicherte Wasser kann bei längerer Zeit ohne Niederschläge durch Verdunstung über die Substratschicht entweichen.

Die möglichen Anordnungen der Durchbrüche können im Rahmen der Erfindung auch in verschiedenster Weise kombiniert werden, z.B. in der Weise, dass ein Teil der Vertiefungen in den Bodenflächen und ein Teil der Vertiefungen in den Seitenflächen Durchbrüche aufweist. Die Erfindung ermöglicht es somit, durch sehr einfache Mittel ein Wasserretentionselement bereitzustellen, das im Hinblick auf die Abflusskennzahl für einen gegebenen Aufbau einer Dachbegrünung optimiert ist.

Die Durchbrüche in dem Retentionselement weisen günstigerweise einen Durchmesser von 1 bis 4 mm auf, bevorzugt von 1 bis 2 mm. Die Durchbrüche sind relativ klein im Verhältnis zu den Bodenflächen der Vertiefungen, so dass der Abfluss von Wasser aus dem Retentionselement verzögert erfolgt. Das Retentionselement behält also seine (zumindest temporäre) Wasserspeicherfunktion, die maximale Aufnahmekapazität wird aber langsamer erreicht als bei einem entsprechenden Element ohne Durchbrüche. Die Gesamtfläche der Durchbrüche im Verhältnis zur Gesamtfläche der Bodenflächen nimmt einen Anteil von 0,02% bis 0,5% ein, insbesondere von 0,03% bis 0,1%.

Die Gesamtfläche der Bodenflächen nimmt im Verhältnis zur Gesamtfläche des Retentionselements bevorzugt einen Anteil von 30% bis 50% ein. Mit der "Gesamtfläche des Retentionselements" ist hier die Projektionsfläche in der Ebene des Flächenelements gemeint, entsprechend der von dem Retentionselement abgedeckten Dachfläche.

Die Seitenwände der Vertiefungen weisen bevorzugt eine Höhe von 20 bis 60 mm auf. Die Höhe der Seitenwände entspricht im Wesentlichen der Gesamtdicke des Retentionselements zwischen der Unterseite, die von den Bodenflächen der Vertiefungen definiert wird, und der Oberseite, die von den Stegen zwischen den Vertiefungen definiert wird.

Aufgrund der vorstehend beschriebenen bevorzugten Abmessungen der Vertiefungen weist das Retentionselement typischerweise ein Wasserspeichervermögen von 5 bis 30 Liter pro m² der Gesamtfläche des Retentionselements auf, bevorzugt von 7 bis 20 Liter pro m². Dieses Volumen ergibt sich, wenn sämtliche Vertiefungen vollständig mit Wasser gefüllt sind. Gemäß einer weiteren vorteilhaften Ausführungsform der Erfindung sind benachbarte Vertiefungen in einem oberen Bereich der Seitenflächen durch Kanäle miteinander verbunden, die durch eine Absenkung in den die Vertiefungen verbindenden Stegen gebildet sind. Über diese Kanäle kann Wasser unterhalb der Substratschicht seitlich abfließen, wenn das Wasserspeichervermögen des Retentionselements erreicht ist, so dass dieses zusätzlich als Drainageelement wirkt.

Das Retentionselement ist günstigerweise durch Umformen aus einer Kunststofffolie hergestellt. Entsprechende Verfahren sind aus dem Stand der Technik bekannt. Die Durchbrüche können nach dem Umformprozess z.B. mittels Stanzen in die Folie eingebracht werden.

Die Kunststofffolie für die Herstellung des Retentions-elements ist vorzugsweise aus Polyethylen gebildet, insbesondere aus HDPE, oder aus Polypropylen.

Die Kunststofffolie weist bevorzugt eine Dicke von 1 bis 2 mm auf.

Beim Einbau des Wasserretentionselements können benachbarte Retentionselemente entweder stumpf gestoßen oder überlappend verlegt werden. Dabei ist die Verlegerichtung unabhängig von der Geometrie, Gefällerichtung und Entwässerungssituation der Fläche (z.B. einer Dachfläche), auf der das Retentionselement eingesetzt wird. Dies stellt einen weiteren Vorteil gegenüber einigen der bekannten Lösungen dar, da die Handhabung beim Einbau vereinfacht wird.

Das Wasserretentionselement kann in verschiedenen Bereichen zum Einsatz kommen, wo eine Verringerung der Abflusskennzahl einer Dachfläche oder Belagsfläche erreicht werden soll, insbesondere bei einer Dachbegrünung.

Die vorliegende Erfindung betrifft in diesem Zusammenhang eine Anordnung nach Anspruch 1 für eine Dachbegrünung auf einem Gebäudedach, umfassend in der angegebenen Reihenfolge:
- eine wasserundurchlässige Abdichtung des Gebäudedaches;
- eine Drainageschicht;
- ein Wasserretentionselement; und
- eine Substratschicht zur Aufnahme von Pflanzen.

Die angegebene Reihenfolge der Anordnung ist nicht so zu verstehen, dass die genannten Elemente unmittelbar aufeinanderfolgen müssen. Vielmehr können im Rahmen der Erfindung zusätzliche Schichten zwischen den genannten Elementen angeordnet sein.

Das Gebäudedach weist in der Regel eine Neigung von bis zu 5° auf. Dächer mit einer Neigung in diesem Bereich werden allgemein als Flachdächer bezeichnet. Die erfindungsgemäße Anordnung ist prinzipiell auch auf einem Gebäudedach ohne Neigung (0°-Dach) ausführbar, typisch ist in der Praxis jedoch eine Dachneigung zwischen 1° und 5°.

Die bei der erfindungsgemäßen Anordnung als solche bezeichnete Drainageschicht kann neben ihrer Funktion, das aus den Durchbrüchen des Retentionselements austretende Wasser aufzunehmen und seitlich abzuleiten, auch noch weitere Funktionen erfüllen. Insbesondere kann diese Drainageschicht auch als eine Schutzschicht für die darunter angeordnete Abdichtung des Gebäudedaches dienen.

Die Drainageschicht weist bevorzugt ein Wasserspeichervermögen von 2 bis 5

Liter pro m² auf. Diese relativ geringe Speicherkapazität ist ausreichend, um das verzögert aus dem Retentionselement nach unten austretende Wasser aufzunehmen und seitlich abzuleiten.

Die Dicke der Drainageschicht beträgt vorzugsweise 3 bis 6 mm.

Bei einer bevorzugten Ausführungsform ist die Drainageschicht aus Fasern aus einem oder mehreren Kunststoffmaterialien gebildet. Besonders geeignet ist insbesondere eine Drainageschicht aus einer Mischung von Polyethylensulfon- und Polypropylenfasern.

Die Substratschicht der erfindungsgemäßen Anordnung weist vorzugsweise eine Dicke von 5 bis 15 cm auf. Die Dicke der Substratschicht wird insbesondere in Abhängigkeit von der vorgesehenen Bepflanzung gewählt, so dass eine ausreichende Tiefe für die Wurzeln der jeweiligen Pflanzen zur Verfügung steht.

Zwischen der Substratschicht und dem erfindungsgemäßen Retentionselement ist bevorzugt eine wasserdurchlässige Filterschicht angeordnet, um das Eindringen von Substrat oder von Bestandteilen des Substrats in die Vertiefungen des Retentionselements zu verhindern. Als Filterschicht ist insbesondere ein Vlies aus Kunststofffasern geeignet.

Ferner kann zwischen der wasserundurchlässigen Abdichtung und der Drainageschicht eine Trenn- und Gleitschicht angeordnet sein. Die Trenn- und Leitschicht kann insbesondere eine dünne Kunststofffolie sein, z.B. aus Polyethylen.

Die wasserundurchlässige Abdichtung des Gebäudedaches ist typischerweise eine bituminöse Abdichtung, z.B. eine Bitumen-Schweißbahn.

Das Wasserretentionselement bewirkt, dass ein Teil des zurückgehaltenen Niederschlagswassers verzögerten nach unten entweichen kann, wodurch der Anteil an abfließendem Wasser bei einem starken Niederschlagsereignis reduziert wird.

Diese und weitere Vorteile der Erfindung werden anhand der nachfolgenden Ausführungsbeispiele unter Bezugnahme auf die Figuren näher erläutert.

Es zeigen im Einzelnen:
- Fig. 1:: eine Draufsicht auf ein erstes Ausführungsbeispiel eines Retentionselements;
- Fig. 2:: einen Querschnitt durch das erste Ausführungsbeispiel des Retentionselements; und
- Fig. 3:: einen Querschnitt durch ein zweites Ausführungsbeispiel eines Retentionselements.

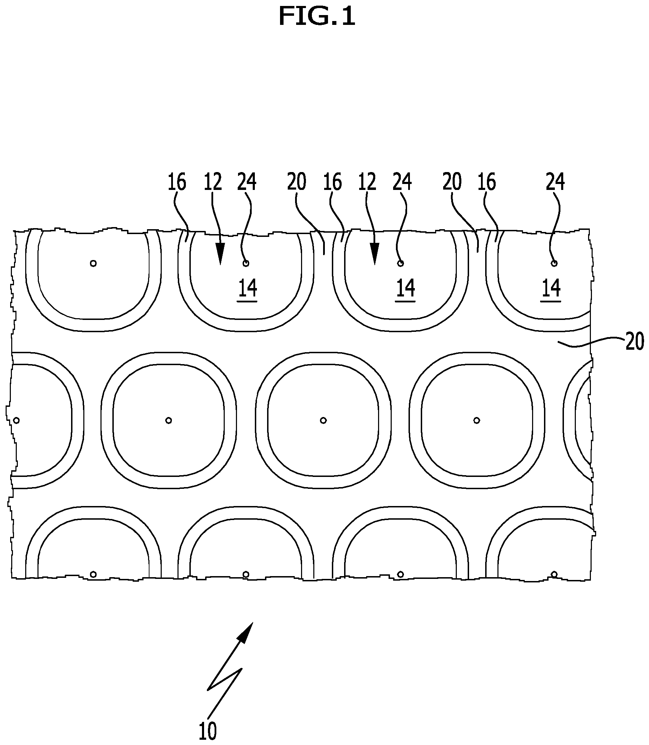

Die Fig. 1 zeigt schematisch eine Draufsicht auf ein erstes Ausführungsbeispiel eines Wasserretentionselements 10 für eine Dachbegrünung. Das Retentionselement 10 erstreckt sich als Flächenelement in der Zeichenebene. Es weist eine Mehrzahl von Vertiefungen 12 auf, die nach oben offen sind, und die in mehreren Reihen nebeneinander angeordnet sind. Benachbarte Reihen sind jeweils gegeneinander versetzt.

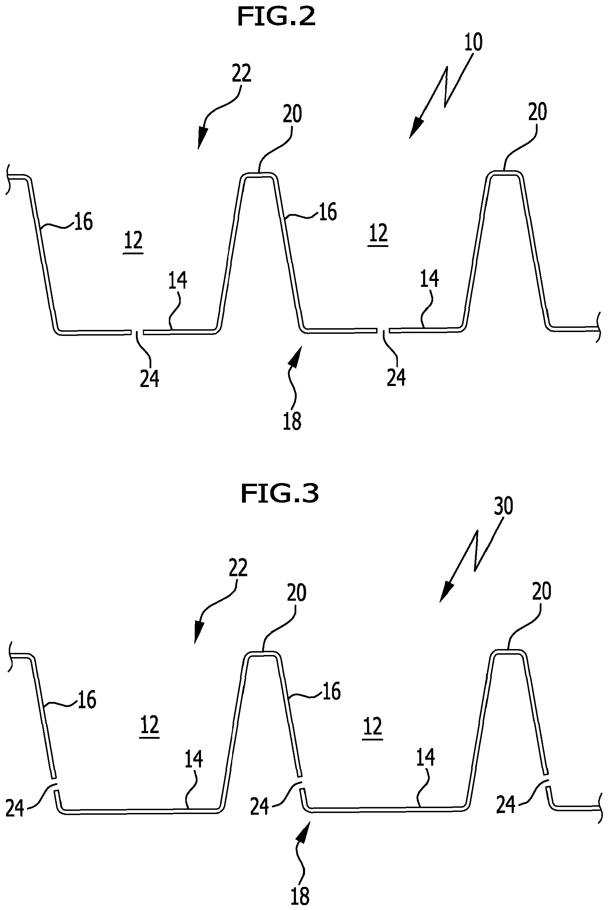

Die Fig. 2 zeigt schematisch einen Querschnitt durch das Retentionselement 10 der Fig. 1, insbesondere einen Querschnitt durch eine Reihe von Vertiefungen 12. Jede Vertiefung 12 weist eine im Wesentlichen kreisförmige Bodenfläche 14 auf sowie eine leicht geneigte, nach unten kegelstumpfförmig zulaufende Seitenfläche 16.

Die Bodenflächen 14 der Vertiefungen 12 definieren gemeinsam eine Unterseite 18 des Retentionselements 10. An den oberen Enden der Seitenflächen 16 sind die Vertiefungen 12 über Stege 20 miteinander verbunden, die gemeinsam eine Oberseite 22 des Retentionselements 10 definieren.

Die Vertiefungen 12 sind mit Durchbrüchen 24 versehen, wobei in diesem ersten Ausführungsbeispiel des Retentionselements 10 jede Vertiefung 12 in ihrer Bodenfläche 14 einen Durchbruch 24 aufweist. Alternativ kann auch vorgesehen sein, dass nur jede zweite Bodenfläche 14 einen Durchbruch 24 aufweist.

Die Fig. 3 zeigt schematisch einen Querschnitt durch ein zweites Ausführungsbeispiel eines Wasserretentionselements 30. Gleiche Elemente sind jeweils mit demselben Bezugszeichen versehen wie bei dem ersten Ausführungsbeispiel gemäß den Fig. 1 und 2.

Das Retentionselement 30 unterscheidet sich von dem Retentionselement 10 des ersten Ausführungsbeispiels lediglich dadurch, dass die Durchbrüche 24 nicht in den Bodenflächen 14 der Vertiefungen 12 angeordnet sind, sondern in einem unteren Bereich der Seitenflächen 16. Dies führt dazu, dass im Gegensatz zum ersten Ausführungsbeispiel eine gewisse Menge an Wasser unterhalb der Durchbrüche 24 in den Vertiefungen 12 verbleibt und dauerhaft gespeichert wird. Während eines längeren Zeitraums ohne Niederschläge kann dieses Wasser durch Verdunstung über die Substratschicht entweichen.

Die Retentionselemente 10 und 30 der vorstehend beschriebenen Ausführungsbeispiele sind aus einer Kunststofffolie aus HDPE durch Umformen hergestellt. Die Dicke der HDPE-Folie beträgt in diesen Beispielen 1,8 mm.

Die beispielhaften Retentionselemente 10 und 30 weisen eine Höhe zwischen der Unterseite 18 und der Oberseite 22 von ca. 40 mm auf. Der Durchmesser der Bodenflächen 14 beträgt ca. 42 mm und der Durchmesser der Öffnungen der Vertiefungen 12 an der Oberseite 22 beträgt ca. 55 mm, wobei die Gesamtfläche der Bodenflächen 14 ca. 42% der Gesamtfläche der Retentionselemente 10 und 30 einnimmt. Hieraus ergibt sich ein Wasserspeichervermögen der Retentionselemente 10 und 30 von ca. 13,5 Liter pro m² der Gesamtfläche.

Die Durchbrüche 24 weisen bei den Retentionselementen 10 und 30 gemäß den Ausführungsbeispielen einen Durchmesser von ca. 1,3 mm auf. Die Durchbrüche 24 können insbesondere durch Ausstanzen hergestellt werden.

### Bestimmung der Abflusskennzahl

Die Abflusskennzahl C nach DIN EN 12056-3 und DIN 1986-100 ist definiert als das Verhältnis der von einer Fläche abfließenden Wassermenge zur gesamten Niederschlagsmenge innerhalb eines bestimmten Zeitraums. Dabei kann die Abflusskennzahl einen Wert zwischen den beiden Grenzwerten 0 (bei einer unbefestigten Vegetationsfläche) und 1 (bei einer versiegelten, wasserundurchlässigen Fläche) einnehmen.

Bei einer Dachbegrünung ist die Abflusskennzahl ein Maß für die Wasserretentionsfähigkeit, wobei generell unter dem Aspekt der Siedlungswasserwirtschaft eine möglichst niedrige Abflusskennzahl wünschenswert ist.

Die Bestimmung der Abflusskennzahl C wurde für vier verschiedene erfindungsgemäße Anordnungen für eine Dachbegrünung, die sich jeweils in der Dicke der Substratschicht unterschieden, gemäß den Prüfmethoden der FLL-Richtlinie "Planung, Bau und Instandhaltung von Dachbegrünungen" in der aktuellen Fassung von 2018 durchgeführt. Dabei wird eine simulierte Niederschlagsmenge von 27 Liter/m² innerhalb von 15 Minuten (entsprechend einem Starkregen) auf den Versuchsaufbau aufgebracht und die Menge des während dieses Zeitraums abfließenden Wassers gemessen.

Die untersuchten Anordnungen werden mit einer Neigung von 2° auf Versuchstischen aufgebaut und weisen eine Länge von 5 m in Gefällerichtung und eine Breite von 1 m auf. Die Anordnung der einzelnen Elemente/Schichten von unten nach oben ist wie folgt:
1. Bituminöse Wurzelschutzbahn als wasserundurchlässige Abdichtung
2. Faserschutzmatte aus Polyethylensulfon- und Polypropylenfasern mit einer Dicke von ca. 4 mm, einem Flächengewicht von ca. 600 g/m² und einem Wasserspeichervermögen von ca. 3 Liter/m² als Drainageschicht
3. Retentionselement gemäß dem oben beschriebenen ersten Ausführungsbeispiel
4. Faservlies aus Polyester/Polypropylen mit einem Flächengewicht von ca. 125 g/m² als Filterschicht
5. Pflanzerde mit einer maximalen Wasserkapazität von 35 Vol.% (ohne Bepflanzung), je nach Versuchsanordnung mit einer Dicke von 6 cm, 8 cm, 10 cm oder 12 cm

Vor der eigentlichen Messung werden die Versuchsanordnungen zunächst dauerhaft beregnet, bis sich ein gleichmäßiger Wasserabfluss über 10 Minuten einstellt, so dass eine Sättigung bis zur maximalen Wasseraufnahmekapazität vorliegt. Anschließend werden die Anordnungen während eines Zeitraums von 24 Stunden abtropfen gelassen.

Zur Bestimmung der Abflusskennzahl werden die Versuchsanordnungen mit einer Wassermenge von 27 Liter/m² innerhalb von 15 Minuten mit möglichst gleichmäßiger Intensität beregnet. Die innerhalb dieser 15 Minuten in Gefällerichtung abfließende Wassermenge wird aufgefangen und ihr Volumen bestimmt. Die Division dieses Volumens durch die insgesamt aufgebrachte Wassermenge (5.27 Liter/m²=135 Liter) ergibt die Abflusskennzahl C, die zur Berücksichtigung des vegetationslosen Zustandes der Substratschicht noch um 0,05 nach unten korrigiert wird.

Die gemessenen Abflusskennzahlen C für die erfindungsgemäßen Anordnungen mit unterschiedlichen Dicken der Substratschicht sind in der folgenden Tabelle 1 aufgeführt:

**Tabelle 1:**

| **Substratschicht** | **C** |
|---|---|
| 6 cm | 0,24 |
| 8 cm | 0,16 |
| 10 cm | 0,11 |
| 12 cm | 0,10 |

Zum Vergleich wurden entsprechende Messungen auch mit Anordnungen für Dachbegrünungen durchgeführt, die sich von den untersuchten erfindungsgemäßen Anordnungen lediglich dadurch unterscheiden, dass in dem Wasserretentionselement keine Durchbrüche vorgesehen sind.

Die Ergebnisse für diese Vergleichsanordnungen sind in der nachfolgenden Tabelle 2 angegeben:

**Tabelle 2:**

| **Substratschicht** | **C** |
|---|---|
| 6 cm | 0,42 |
| 8 cm | 0,40 |
| 10 cm | 0,37 |

Der Vergleich zeigt, dass durch die bei dem Wasserretentionselement vorgesehenen Durchbrüche die Abflusskennzahl einer entsprechenden Anordnung für eine Dachbegrünung deutlich gesenkt werden kann.

Die Erfindung stellt somit eine einfache, kostengünstige und zugleich äußerst effektive Maßnahme dar, um das Wasserretentionsvermögen bei einer Dachbegrünung zu verbessern.

### Bezugszeichenliste

- 10: Retentionselement
- 12: Vertiefungen
- 14: Bodenflächen
- 16: Seitenflächen
- 18: Unterseite
- 20: Stege
- 22: Oberseite
- 24: Durchbrüche
- 30: Retentionselement

## Patentansprüche

1. Anordnung für eine Dachbegrünung auf einem Gebäudedach, umfassend in der angegebenen Reihenfolge:
- eine wasserundurchlässige Abdichtung des Gebäudedaches;
- eine Drainageschicht;
- ein Wasserretentionselement (10; 30); und
- eine Substratschicht zur Aufnahme von Pflanzen,
wobei das Retentionselement (10; 30) als Flächenelement ausgebildet ist mit einer Mehrzahl von nebeneinander angeordneten, nach oben offenen Vertiefungen (12), wobei die Vertiefungen (12) Bodenflächen (14) aufweisen, die gemeinsam eine Unterseite (18) des Retentionselements (10; 30) definieren, und Seitenflächen (16), an deren oberen Enden die Vertiefungen (12) über Stege (20) miteinander verbunden sind, und wobei zumindest ein Teil der Vertiefungen (12) in den Bodenflächen (14) und/oder in einem unteren Bereich der Seitenflächen (16) einen oder mehrere Durchbrüche (24) aufweist,
**dadurch gekennzeichnet, dass** die Gesamtfläche der Durchbrüche (24) im Verhältnis zur Gesamtfläche der Bodenflächen (14) einen Anteil von 0,02% bis 0,5% einnimmt.

2. Anordnung nach Anspruch 1, wobei jede Vertiefung (12) oder jede zweite Vertiefung (12) in der Bodenfläche (14) mindestens einen Durchbruch (24) aufweist, insbesondere genau einen Durchbruch (24); und/oder wobei jede Vertiefung (12) in einem unteren Bereich der Seitenfläche (16) mindestens einen Durchbruch (24) aufweist.

3. Anordnung nach einem der vorhergehenden Ansprüche, wobei die Durchbrüche (24) einen Durchmesser von 1 bis 4 mm aufweisen, bevorzugt von 1 bis 2 mm.

4. Anordnung nach einem der vorhergehenden Ansprüche, wobei die Gesamtfläche der Durchbrüche (24) im Verhältnis zur Gesamtfläche der Bodenflächen (14) einen Anteil von 0,03% bis 0,1% einnimmt.

5. Anordnung nach einem der vorhergehenden Ansprüche, wobei die Gesamtfläche der Bodenflächen (14) im Verhältnis zur Gesamtfläche des Retentionselements (10; 30) einen Anteil von 30% bis 50% einnimmt; und/oder wobei die Seitenwände (16) der Vertiefungen (12) eine Höhe von 20 bis 60 mm aufweisen.

6. Anordnung nach einem der vorhergehenden Ansprüche, wobei das Retentionselement (10; 30) ein Wasserspeichervermögen von 5 bis 30 Liter pro m² der Gesamtfläche des Retentionselements (10; 30) aufweist, bevorzugt von 7 bis 20 Liter pro m².

7. Anordnung nach einem der vorhergehenden Ansprüche, wobei benachbarte Vertiefungen (12) in einem oberen Bereich der Seitenflächen (16) über Kanäle miteinander verbunden sind, die durch eine Absenkung in den die Vertiefungen verbindenden Stegen (20) gebildet sind.

8. Anordnung nach einem der vorhergehenden Ansprüche, wobei das Retentionselement (10; 30) durch Umformen aus einer Kunststofffolie hergestellt ist, insbesondere aus Polyethylen, wie z.B. HDPE, oder aus Polypropylen.

9. Anordnung nach einem der vorhergehenden Ansprüche, wobei das Gebäudedach eine Neigung von bis zu 5° aufweist, insbesondere zwischen 1° und 5°.

10. Anordnung nach einem der vorhergehenden Ansprüche, wobei die Drainageschicht ein Wasserspeichervermögen von 2 bis 5 Liter pro m² aufweist.

11. Anordnung nach einem der vorhergehenden Ansprüche, wobei die Drainageschicht eine Dicke von 3 bis 6 mm aufweist.

12. Anordnung nach einem der vorhergehenden Ansprüche, wobei die Drainageschicht aus Fasern aus einem oder mehreren Kunststoffmaterialien gebildet ist, insbesondere aus einer Mischung von Polyethylensulfon- und Polypropylenfasern.

13. Anordnung nach einem der vorhergehenden Ansprüche, wobei die Substratschicht eine Dicke von 5 bis 15 cm aufweist.

14. Anordnung nach einem der vorhergehenden Ansprüche, wobei zwischen der Substratschicht und dem Retentionselement eine wasserdurchlässige Filterschicht angeordnet ist, insbesondere ein Vlies aus Kunststofffasern.

## Claims

1. An arrangement for a roof greening on a roof of a building, including in the specified order:
• a waterproof seal of the roof of the building;
• a drainage layer;
• a water retention element (10; 30); and
• a substrate layer for the accommodation of plants,
wherein the retention element (10; 30) is formed as a planar element with a plurality of recesses (12) which are arranged next to each other and are upwardly open, wherein the recesses (12) have base areas (14), which together form a lower side (18) of the retention element (10; 30), and side areas (16), at the upper ends of which the recesses (12) are connected together by means of web elements (20), and wherein at least a portion of the recesses (12) in the base areas (14) and/or in a lower region of the side areas (16) have one or more through openings (24),
**characterised in that** the total area of the through openings (24) in relation to the entire surface area of the base areas (14) occupy a proportion of 0.02% to 0.5%.

2. An arrangement according to claim 1, wherein each recess (12) or every second recess (12) has at least one through opening (24) in the base area (14), in particular precisely one through opening (24); and/or wherein each recess (12) has at least one through opening (24) in a lower region of the side area (16).

3. An arrangement according to one of the preceding claims, wherein the through openings (24) have a diameter of 1 to 4 mm, preferably of 1 to 2 mm.

4. An arrangement according to one of the preceding claims, wherein the entire area of the through openings (24) in relation to the entire surface area of the base areas (14) occupies a proportion of 0.03% to 0.1%.

5. An arrangement according to one of the preceding claims, wherein the total surface area of the base areas (14) in relation to the entire surface area of the retention element (10; 30) occupies a proportion of 30% to 50%; and/or wherein the side walls (16) of the recesses (12) have a height of 20 to 60 mm.

6. An arrangement according to one of the preceding claims, wherein the retention element (10; 30) has a water storage capacity of 5 to 30 litres per m² of the entire surface area of the retention element (10; 30), preferably of 7 to 20 litres per m².

7. An arrangement according to one of the preceding claims, wherein adjacent recesses (12) in an upper region of the side areas (16) are connected to each other by means of channels, which are formed by a depression in the web elements (20) connecting the recesses.

8. An arrangement according to one of the preceding claims, wherein the retention element (10; 30) is made by forming from a plastics film, in particular of polyethylene, such as e.g. HDPE, or from polypropylene.

9. An arrangement according to one of the preceding claims, wherein the roof of the building has an inclination of up to 5°, in particular between 1° and 5°.

10. An arrangement according to one of the preceding claims, wherein the drainage layer has a water storage capacity of 2 to 5 litres per m².

11. Arrangement according to one of the preceding claims, wherein the drainage layer has a thickness of 3 to 6 mm.

12. An arrangement according to one of the preceding claims, wherein the drainage layer is formed of fibres of one or more plastics materials, in particular from a mixture of polyethersulfone fibres and polypropylene fibres.

13. An arrangement according to one of the preceding claims, wherein the substrate layer has a thickness of 5 to 15 cm.

14. An arrangement according to one of the preceding claims, wherein between the substrate layer and the retention element there is arranged a water permeable filter layer, in particular a non-woven fabric of plastics fibres.

## Revendications

1. Ensemble pour une toiture végétale sur un toit de bâtiment, comprenant dans l'ordre indiqué :
- un joint d'étanchéité imperméable à l'eau du toit de bâtiment ;
- une couche de drainage ;
- un élément de rétention (10 ; 30) d'eau ; et
- une couche de substrat pour la réception de plantes,
dans lequel l'élément de rétention (10 ; 30) est réalisé sous la forme d'un élément plan avec une pluralité d'évidements (12) disposés les uns à côté des autres, ouverts vers le haut, dans lequel les évidements (12) présentent des surfaces de fond (14), qui définissent conjointement une face inférieure (18) de l'élément de rétention (10 ; 30), et des surfaces latérales (16), sur les extrémités supérieures desquelles les évidements (12) sont reliés les uns aux autres par l'intermédiaire d'éléments jointifs (20), et dans lequel au moins une partie des évidements (12) dans les surfaces de fond (14) et/ou dans une zone inférieure des surfaces latérales (16) présente une ou plusieurs percées (24),
**caractérisé en ce que** la surface totale des percées (24) occupe par rapport à la surface totale des surfaces de fond (14) un pourcentage de 0,02 % à 0,5 %.

2. Ensemble selon la revendication 1, dans lequel chaque évidement (12) ou un évidement (12) sur deux présente dans la surface de fond (14) au moins une percée (24), en particulier exactement une percée (24) ; et/ou dans lequel chaque évidement (12) présente dans une zone inférieure de la surface latérale (16) au moins une percée (24).

3. Ensemble selon l'une quelconque des revendications précédentes, dans lequel les percées (24) présentent un diamètre de 1 à 4 mm, de préférence de 1 à 2 mm.

4. Ensemble selon l'une quelconque des revendications précédentes, dans lequel la surface totale des percées (24) occupe par rapport à la surface totale des surfaces de fond (14) un pourcentage de 0,03 % à 0,1 %.

5. Ensemble selon l'une quelconque des revendications précédentes, dans lequel la surface totale des surfaces de fond (14) occupe par rapport à la surface totale de l'élément de rétention (10 ; 30) un pourcentage de 30 % à 50 % ; et/ou dans lequel les parois latérales (16) des évidements (12) présentent une hauteur de 20 à 60 mm.

6. Ensemble selon l'une quelconque des revendications précédentes, dans lequel l'élément de rétention (10 ; 30) présente une capacité de stockage d'eau de 5 à 30 litres par m² de la surface totale de l'élément de rétention (10 ; 30), de préférence de 7 à 20 litres par m².

7. Ensemble selon l'une quelconque des revendications précédentes, dans lequel des évidements (12) voisins dans une zone supérieure des surfaces latérales (16) sont reliés les uns aux autres par l'intermédiaire de canaux, qui sont formés par un abaissement dans les éléments jointifs (20) reliant les évidements.

8. Ensemble selon l'une quelconque des revendications précédentes, dans lequel l'élément de rétention (10 ; 30) est fabriqué par formage à partir d'une feuille plastique, en particulier à partir de polyéthylène, comme par exemple HDPE, ou à partir de polypropylène.

9. Ensemble selon l'une quelconque des revendications précédentes, dans lequel le toit du bâtiment présente une inclinaison allant jusqu'à 5°, en particulier comprise entre 1° et 5°.

10. Ensemble selon l'une quelconque des revendications précédentes, dans lequel la couche de drainage présente une capacité de stockage d'eau de 2 à 5 litres par m².

11. Ensemble selon l'une quelconque des revendications précédentes, dans lequel la couche de drainage présente une épaisseur de 3 à 6 mm.

12. Ensemble selon l'une quelconque des revendications précédentes, dans lequel la couche de drainage est formée de fibres composées d'une ou plusieurs matières plastiques, en particulier d'un mélange de fibres de polyéthylènesulfone et de polypropylène.

13. Ensemble selon l'une quelconque des revendications précédentes, dans lequel la couche de substrat présente une épaisseur de 5 à 15 cm.

14. Ensemble selon l'une quelconque des revendications précédentes, dans lequel une couche filtrante perméable à l'eau est disposée entre la couche de substrat et l'élément de rétention, en particulier un non-tissé composé de fibres synthétiques.
